Europäisches Patentamt

European Patent Office

Office européen des brevets

(11) Publication number: **0 372 181**
A1

# EUROPEAN PATENT APPLICATION

(21) Application number: **89117483.1**

(22) Date of filing: **21.09.89**

(51) Int. Cl.⁵: **H05B 33/08, G04G 1/00**

(30) Priority: **08.12.88 US 281164**

(43) Date of publication of application:
**13.06.90 Bulletin 90/24**

(84) Designated Contracting States:
**CH DE FR GB LI**

(71) Applicant: **Timex Corporation**

**Waterbury, Connecticut 06722(US)**

(72) Inventor: **Kamens, Bruce H.**
**440 Smith Road**
**Thomaston Connecticut 06787(US)**

(74) Representative: **Hoeger, Stellrecht & Partner**
**Uhlandstrasse 14 c**
**D-7000 Stuttgart 1(DE)**

(54) **Improved power supply circuit for electroluminescent light panels operated from low voltage battery source.**

(57) A power converter for electroluminescent lamps used in wristwatches and other similar low power rated capacitive loads operated from a low voltage battery power supply source. The converter comprises first and second SCRs (11) and (12) employed in conjunction with a voltage step-up flyback converter (L, 16, 18) for supplying relatively high positive first and second SCRs. An electroluminescent lamp (25) or other similar capacitive load, is connected between the cathodes of the SCRs. First and second switching transistors (21, 22) are coupled between respective trigger gates of the SCR and a source of negative electric potential. Sources of first and second out-of-phase alternating enabling potential are coupled to control alternate periods of conductions of the first and second switching transistors whereby the first and second SCRs alternatively are enabled to be rendered conductive for discrete intervals of time determined by the periods of enabling potentials. The flyback converter comprises a voltage step-up circuit formed by an inductor and third switching transistor connected in series circuit relationship between the low voltage battery supply and ground with the juncture of the inductor and third switching transistor collector being connected through a diode to a positive polarity potential terminal conductor buss that is connected in common to the anodes of the first and second SCRs. A source of high frequency gating signals having a frequency of alternation enabling potentials is coupled to control operation of the third switching transistor. In preferred embodiments, a small trigger gate capacitor is interconnected between the anode and trigger gates of the respective SCRs and an isolating diode is connected in circuit relationship with each end of the electroluminescent lamp capacitor and the juncture of the switching transistors with the trigger gate of the respective SCRs.

Fig.1

# IMPROVED POWER SUPPLY CIRCUIT FOR ELECTROLUMINESCENT LIGHT PANELS OPERATED FROM LOW VOLTAGE BATTERY SOURCE

## FIELD OF THE INVENTION

This invention relates to an improved power supply circuit for use in powering capacitive type loads such as electroluminescent lamp panels for illuminating wristwatch dials.

More particularly, the invention relates to a low cost, low power, power supply circuit employing silicon controlled rectifiers (SRCs) or their equivalent hooked transistor configuration, and which is reliable in operation, uses a minimum number of components and is susceptible to manufacture in monolithic integrated circuit form whereby the circuit readily can be incorporated into wristwatches and the like for use with low voltage battery power sources.

## BACKGROUND PRIOR ART

This invention is intended for use as the power supply circuit for an electroluminescent dial wristwatch of the type disclosed in United States Patent No. 4,775,964, issued October 4, 1988, entitled "Electroluminescent Dial for an Analog Watch and Process for Making It", assigned to Timex Corporation. A prior art circuit used for the same purpose is disclosed in United States Patent No. 4,527,096, issued July 2, 1985, entitled "Drive Circuit for Capacitive Electroluminescent Panels" by Peter J. Kindlmann, inventor and assigned to Timex Corporation.

## SUMMARY OF THE INVENTION

This invention provides a low cost, reliable power supply circuit employing SCRs or their hooked transistor equivalent which can be readily fabricated in integrated circuit form and used in conjunction with a low voltage battery power source to operate electroluminescent light panels employed to provide background lighting for electroluminescent dial·wristwatches.

In practicing the invention, an improved power supply circuit is provided for exciting an electroluminescent lamp used in wristwatches, and other similar, low power-rated capacitive loads operated from a low voltage, battery supply source. The circuit is comprised by first and second gate triggered conducting devices each of the type having first and second terminal electrodes and a control gate and which when rendered conductive remain conducting until current flowing through the device drops below a critical value known as the holding current and conduction through the device ceases. A flyback voltage step-up sub-circuit is provided for supplying a relatively high voltage electric potential having a first polarity in common to the first terminal electrodes of the first and second gate control conducting devices. Means provided for connecting a capacitive load between corresponding second terminal electrodes of the first and second gate triggered conducting devices. The circuit further includes first and second switching devices coupled between the respective trigger gates of the gate triggered conducting devices and a source of opposite polarity, second electric potential. A source of first and second, 180 degrees out-of-phase, alternating enabling potentials is coupled to and controls alternate periods of conduction of the first and second switching devices whereby the first and second trigger-control conducting devices alternately are enabled to be rendered conductive for discrete intervals of time determined by the periods of the enabling potentials. The flyback voltage step-up sub-circuit means comprises a voltage step-up converter circuit formed by an inductor and a third switching device connected in series circuit relationship between a low voltage battery source of first electric potential and the source of opposite polarity second electric potential. The juncture of the inductor and a third switching device is connected through a diode rectifier to a common terminal conductor buss that is connected in common to the corresponding first terminal electrodes of the first and second gate controlled conducting devices. The power circuit is completed by a source of high frequency switching signals having a frequency of alternation that is much higher than the out-of-phase alternating enabling potentials, with the high frequency switching signals being coupled to and controlling operation of the third switching device.

An electroluminescent light suitable for use in illuminating the dial of a wristwatch is connected between the corresponding second terminal electrodes of the first and second gate triggered conducting devices as the capacitive load.

Further, the first and second gate triggered conducting devices each may comprise silicon control rectifiers or, alternatively, they may comprise a hooked transistor circuit configuration; and the first, second and third switching devices comprise switching transistors.

## BRIEF DESCRIPTION OF DRAWINGS

These and other objects, features and many of the attendant advantages of this invention will be appreciated more readily as the same becomes better understood from a reading of the following detailed description when considered in conjunction with the accompanying drawings, wherein like parts in each of the several figures are identified by the same reference character, and wherein:

Figure 1 is a schematic circuit diagram of a preferred form of power supply circuit employing SCRs constructed in accordance with the invention;

Figure 2 is a schematic circuit diagram of a hooked transistor circuit configuration that is the full electrical equivalent of an SCR, and which may be employed in place of the SCRs used in the circuit of Figure 1; and

Figures 3A, 3B and 3C are characteristic operating curves plotting the build up of voltage versus time across the EL lamp capacitor during operation of the power supply circuit.

## BEST MODE OF PRACTICING THE INVENTION

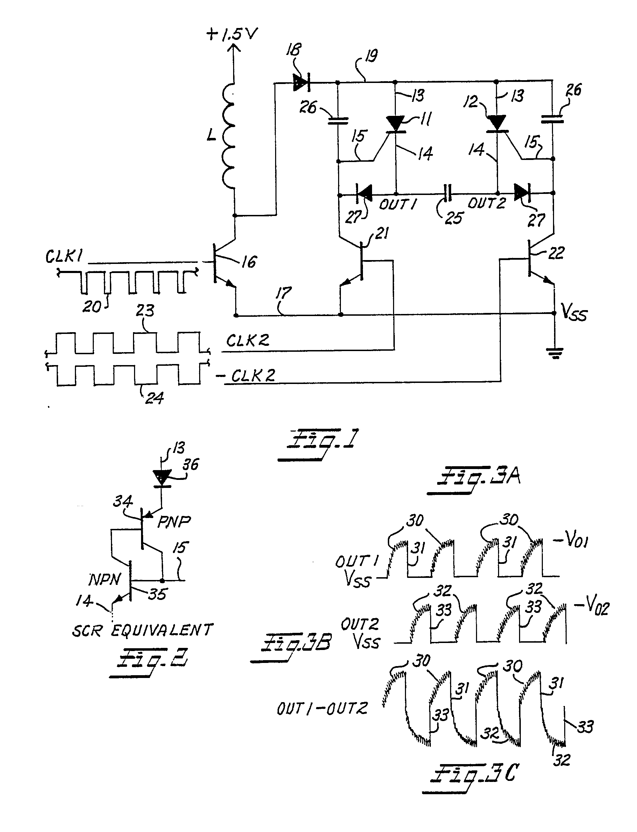

The power supply circuit shown in Figure 1 is comprised ty first and second gate triggered conducting devices 11 and 12, respectively, that constitute silicon controlled rectifiers (SCRs) each having a first (positive) terminal electrode 13, a second (negative) terminal electrode 14 and a control gate 15. The operating characteristics of the SCRs 11 and 12 are such that upon a positive polarity gating potential being applied to the trigger gates 15 thereof, simultaneously with the presence of a positive polarity potential applied to the first (anode) terminal electrodes 13 relative to the second (cathode) negative electrodes 14, the SCR devices will be rendered conductive and will remain conducting until such time that the polarity of the potentials across the terminal electrodes 13 and 14 is reversed or the current flowing through the device drops below a critical value (referred to as the holding current) whereby conduction through the devices ceases.

Positive polarity, relatively high voltage, excitation potentials are supplied in common to the first positive terminal electrodes 13 from a flyback converter circuit means. The flyback converter circuit means is comprised by a voltage step-up, converter formed by a inductor L connected in series circuit relationship with a switching device 16 between a low voltage battery source of electric potential of about +1.5 volts DC and a source of opposite negative polarity, second electric potential formed by a grounded terminal buss 17. The voltage step-up flyback converter is completed by a diode rectifier 18 that has its anode connected to the juncture of the inductor L and the collector of an N-P-N switching transistor that comprises the switching device 16 with the negative or cathode terminal of the diode rectifier 18 being connected a common positive terminal buss 19 that interconnects the positive (anode) terminals 13 of SCRs 11 and 12. A source (not shown) of very high frequency, alternating turn-on gating potential (not shown) is connected to the gate of the N-P-N switching transistor 16 as depicted by the high frequency square waveshaped, pulsed signal waveforms 20 below the lead conductor to the base of switching transistor 16.

First and second switching devices 21 and 22 are interconnected, respectively, between the trigger gate 15 of SCR 11 and the grounded negative terminal buss 17, and between the trigger gate 15 of SCR 12 and grounded negative terminal buss 17. The first and second switching devices 21 and 22 and the third switching device 16 each comprise an N-P-N switching transistor having an emitter, a base and a collector. Sources (not shown) of first and second out-of-phase alternating enabling potentials depicted by the square waveshape curves 23 and 24 are coupled to and control alternate periods of conduction of the first and second switching devices 21 and 22 whereby the first and second gate controlled SCRs 11 and 12 alternatively are enabled to be rendered conductive for discrete intervals of time determined by the period of the enabling potentials 23 and 24. The enabling potentials 23 and 24 are applied to the base of the respective switching transistors 21 and 22 and are 180 degrees out-of-phase with respect to each other. Because the power supply circuit is designed for use with electric watches, the first and second enabling potentials 23 and 24 and the much higher frequency gating potential 20 are derived from the time signal generating circuits of the wristwatch.

An electroluminescent lamp which is to be excited by the power supply is depicted by a capacitor 25 interconnected between the negative polarity terminals (cathodes) of the SCRs 11 and 12 and labelled as out 1 and out 2 to form the output terminals of the circuit. Lamp 25 is connected across "Out 1" and "Out 2".

During operation, gating on and off of the SCRs 11 and 12, respectively, is determined by the switching transistors 21 an 22 whose intervals of conduction are in turn determined by the period of the enabling potentials 23 and 24, respectively. With enabling potential 23 positive, switching transistor 21 becomes conducting and the control gate 15 of SCR 11 will, in effect, be drawn down to the potential of the grounded negative terminal buss 17. Hence, SCR 11 effectively is clamped to the grounded buss 17 and prevented from conducting. During the same interval, the SCR 12 will be enabled to conduct since the base of its associated switching transistor 22 is biased negatively and it is non-conducting. During alternate half cycles of the enabling potentials 23 and 24, the reverse situation is true and SCR 11 will be enabled and SCR 12 prevented from conducting.

While enabled, the trigger gate 15 of SCR 11 is allowed to rise to a triggering potential level and gates on SCR 11 at the high frequency rate of the gating potential 20, as will be explained hereinafter with relation to Figure 3 of the drawings. This ability to gate on SCR 11 continues during the entire half cycle of the enabling potential 24 while transistor 21 is off and SCR 11 is enabled. During the following or second half cycle of the enabling potentials 23 and 24, switching transistor 22 will be turned off and switching transistor 21 will be turned on. Under these conditions, SCR 12 will be enabled and SCR 11 will be unable to conduct. Consequently, SCR 11 will be gated on and turned off at the high frequency rate of gating potential 20 during the first half cycle of the enabling potentials 23 and 24 while SCR 11 is enabled. The reverse situation is true during the second half cycle of enabling potentials 23 and 24 while 12 is enabled and can be gated on and turned off at the high frequency gating potential 20 rate.

Figures 3A, 3B and 3C of the drawings are characteristic curves showing the build up of electric potential across the EL lamp 25 load during successive half cycles of the enabling potentials 23 and 24. The positive half cycle of the enabling potential 24 is shown during the interval 30 in Figure 3A. During the interval, the SCR 11 is enabled and SCR 12 is prevented from conducting. As noted earlier, the gating pulses 20 applied to the base of the N-P-N switching transistor 16 is at a much higher frequency of the order of 8, 16, 32 or other multiple times higher in frequency than the frequency of the enabling potentials 23 and 24. Thus, the flyback converter circuit operating through the switching transistor 16, inductor L and diode 18 and aided by a self-gating characteristic possessed by the SCR 11 (as will be discussed more fully hereafter) causes SCR 11 to be gated-on following each positive going voltage spike of the triggering 16, upon transistor 16 being turned off following a short period of conduction during the positive going voltage spike of gating signal 20.

The positive polarity spikes occurring in the gating potential 20 are relatively short in comparison to the remainder of the period in each cycle of the square waveshape, pulsed gating signal 20. During the short conduction interval of transistor 16, current flows through inductor L to ground via transistor 16 and charges inductor L. Upon turn-off of transistor 16 following the positive going voltage spike of gating signal 20, the voltage across the charged inductor L rises to a value of about 70 volts. This high voltage is coupled across the anode to gate inter-electrode capacitance of the SCR 11, and due to the large or rapid rise in voltage across the anode to gate capacitance (referred to as dv/dt), causes SCR 11 to be gated-on and rendered conductive. The stored energy in inductor L then is dissipated through SCR 11 to incrementally charge EL capacitor 25, and through diode 27 and conducting transistor 22 to ground until inductor L is discharged and the current flow through SCR 11 drops below its critical holding current valve. Upon this occurrence the SCR 11 turns off and completes one operating cycle of the flyback converter circuit comprised by inductor L and transistor L and then discharging it through SCR 11 to incrementally charge up the voltage across the EL capacitor 25 then is repeated a number of times during the ensuing half cycle of enabling potential 23.

Gating-on and turn-off of the SCR 11 in the above-described manner provides additional incremental stepped charges across the plates of the EL capacitor 25 that is connected directly between the output terminals out 1 and out 2 of the circuit. As a result, a positive polarity charge will be built up across EL lamp capacitor 25 during the remaining negative half cycle of enabling potential 23 to value sufficient to fire the EL lamp. This process is repeated during each negative-going half cycle of the enabling potential 23 as shown in Figure 3A.

At the end of each negative half cycle of enabling potential 23, switching transistor 21 is turned on and switching transistor 22 is turned off. This results in clamping the control gate of SCR 11 to the grounded negative terminal buss 17 and prevents it from conducting as shown at 31 in Figure 3A. At this same point, switching transistor 22 is turned off by its enabling potential 24 so that SCR 12 is enabled while SCR 11 is prevented from conducting. As a result, the EL capacitor 25 discharges as shown at 31 in Figure 3A and starts charging with the opposite polarity as shown at 32 in Figure 3B. Thereafer, during the remaining positive polarity half cycle of enabling potential 23 (negative half cycle of enabling potential 24, the EL capacitor 25 is charged with the polarity shown at 32 in Figure 3B to the end of the cycle as as shown at 33. At this point, switching transistor 21 is turned off and switching transistor 22 turned on to commence a new cycle of operation of the power supply circuit.

As shown in Figure 3C, the peak to peak voltage developed across the EL capacitor 25 during each cycle of operation of the power supply circuit in this manner is at or near 140 volts and is at the frequency of the enabling potentials. This voltage difference across the lamp 25 is more than enough to provide adequate firing potential to assure good luminescent from the electroluminescent lamp panel 25, and is at the frequency of the enabling potentials 23 and 24. This frequency is chosen so as to come within the integrating retentivity of the human eye in order that no substantial flicker of the light radiated is detectable.

In the above description of the voltage step-up flyback converter circuit comprised by inductor L, switching transistor 16 and diode 18, turn-on of the enabled SCR 11 or 12 is stated to be achieved through the inter-electrode anode to control gate capacitance of the SCR devices. Since this capacitance might vary from device to device, proper turn-on of the SCR devices is assured by the inclusion of small gating capacitors 26 which are connected between the anode and control gate of the respective SCRs 11 and 12. To assure isolation between the electroluminescent 1amp capacitor 25 during each half cycle of operation of the circuit, blocking or isolating diodes 27 are interconnected between respective plates of the electroluminescent lamp capacitor 25 and the juncture of the respective control gates 15 of SCRs 11 and 12 with the collectors of their respective switching transistors 21 and 22.

Figure 2 is a schematic circuit diagram of a hooked transistor circuit wherein the hooked transistor circuit configuration constitutes the physical equivalent of a silicon controlled rectifier in its operating characteristics. Under certain circumstances, this circuit configuration might prove to be more economical to fabricate in monolithic integrated circuit form than is the SCR configuration shown in Figure 1. In the circuit of Figure 2, the terminal points indicated would correspond to the same referenced terminal points in the Figure 1 circuit. Hence, except for the substitution of the hooked transistor circuit configuration for the SCRs 11 and 12, the power supply circuit of Figure 2 is otherwise identical to that of Figure 1.

In the hooked transistor circuit configuration of Figure 2, a P-N-P transistor 34 has its base electrode connected directly to the collector of an N-P-N transistor 35 and the base electrode of the N-P-N transistor 35 is directly connected to the collector of the P-N-P transistor 34. With this interconnection, the juncture of the base of N-P-N transistor 35 with the collector of the P-N-P transistor 34 serves as the trigger gate 15 for the power supply circuit, the emitter of the N-P-N transistor 35 serves as the negative terminal 14 (Out 2) of the circuit and a diode 36 has its cathode connected to the emitter of the P-N-P transistor 34 and its anode terminal lead serves as the positive terminal lead 13 of the hooked transistor circuit configuration. The hooked transistor circuit configuration is well known and even preceded the advent of commercial SCRs. In other respects, a circuit employing the hooked transistor circuit configuration is entirely similar in construction and operation to that described with relation to Figure 1 using SCRs.

INDUSTRIAL APPLICABILITY

The invention makes available an improved low power, power supply circuit that can be operated from a low voltage battery source of the order of 1.5 volts to provide voltage step-up to a voltage of the order of 70 volts for operation of the electroluminescent lamp panels and other similar capacitive type loads. The circuit is particularly designed for energizing electroluminescent light panels used for background lighting in wristwatches.

Having described two embodiments of a new and improved power supply circuit for electroluminescent light panels operated from low voltage battery sources constructed in accordance with the invention, it is believed obvious that other modifications and variations of the invention will be suggested to those skilled in the art in the light of the above teachings. It is therefore to be understood that changes may be made in the particular embodiments of the invention described which are within the full intended scope of the invention as defined by the appended claims.

## Claims

1. An improved power supply circuit for electroluminescent lamps used in wristwatches, and other similar low power rated capacitive loads to be operated from low voltage battery power supply sources comprising:
first and second gate triggered conducting devices (11, 12) each of the type having first and second terminal electrodes (13, 14) and a trigger gate (15) and which when rendered conductive remain conducting the current flowing through the device drops below a critical holding current value, and conduction through the device ceases;
chopper converter means (16, 17, 18) for supplying a relatively high voltage electric potential having a first polarity in common to the first terminal electrodes of the first and second gate triggered conducting devices;
means for connecting a capacitive load comprising an electroluminescent lamp (25) suitable for use in illuminating a low voltage battery-powered device load between corresponding second terminal electrodes of the first and second gate triggered conducting devices;

first and second switching devices (21, 22) coupled between the respective trigger gates of the gate triggered devices and a source of opposite polarity second potential;

a source of first and second 180 degrees out of phase alternating enabling potentials (23, 24) coupled to and controlling alternate periods of conduction of said first and second switching devices whereby said first and second gate triggered conducting devices alternately are enabled to rendered conductive for discrete intervals of time determined by the period of the enabling potentials;

said chopper means comprising a voltage step-up flyback converter circuit formed by an inductor (L) and a third switching device (16) connected in series circuit relationship between a low voltage battery source of electric potential and the source of opposite polarity second electric potential, the juncture of the inductor and the third switching device being connected through a diode rectifier (18) to a common terminal conductor buss (19) that is connected in common to the corresponding first terminal electrodes of the first and second gate triggered conducting devices; and a source of high frequency switching signals (20) having a frequency of alternation that is much higher than the out-of-phase alternating enabling potentials coupled to and controlling operation of said third switching device.

2. An improved power supply circuit according to claim 1 further including a small trigger gate bias capacitor (26) interconnected between the first terminal electrode and the trigger gate of the respective gate triggered conducting devices.

3. An improved power supply circuit according to claim 1 further including a diode (27) connected between each side of the capacitive load and the juncture of the respective trigger gates of the gate triggered conductig device with the respective first and second switching devices.

4. An improved power supply circuit according to claim 1 wherein the first and second gate triggered conducting devices each comprise silicon controlled rectifiers and the first, second and third switching devices comprise switching transistors.

5. An improved power supply circuit according to claim 1 wherein the first and second gate triggered conducting devices each comprise a hooked transistor circuit configuration of P-N-P and N-P-N switching transistors wherein the emitter of the P-N-P transistor (34) is connected to the cathode of a diode (36) and comprise the positive load terminal (13) of the device, the collector of the N-P-N transistor (35) is connected to the gate of the P-N-P transistor, the collector of the P-N-P transistor is connected to the gate of the N-P-N transistor and constitutes the gate (15) of the device, and the collector of the N-P-N transistor constitutes the negative electrode (14) of the gate triggered conducting device, and the first, second and third switching devices comprise switching transistors.

6. An improved power converter for electroluminescent lamps used in wristwatches, and other similar low power rated capacitive loads to be operated from a low voltage battery power supply source comprising:

first and second gate conducting devices each comprising a hooked transistor circuit configuration of P-N-P and N-P-N switching transistors wherein the emitter of the P-N-P transistor (34) is connected to the cathode of a diode (36) and comprises the positive load terminal (13) of the device, the collector of the N-P-N transistor (35) is connected to the gate of the P-N-P transistor, the collector of the P-N-P transistor is connected to the gate of the N-P-N transistor and constitutes the gate (15) of the device, and the collector of the N-P-N transistor constitutes the negative electrode (14) of the gate triggered conducting device;

voltage step-up flyback converter means for supplying a relatively high voltage positive electric potential in common to the positive electrode terminals of the first and second gate triggered conducting devices;

means for connecting a capacitive load (25) between corresponding negative terminal electrodes of the first and second gate triggered conducting devices;

first and second switching devices (21, 22) coupled between the respective trigger gates of the gate triggered devices and a source of negative electric potential;

a source of first and second 180 degrees out-of-phase alternating enabling potentials (23, 24) coupled to and controlling alternate periods of conduction of said first and second switching devices whereby said first and second gate triggered conducting devices alternately are enabled to be rendered conductive for discrete intervals of time determined by the periods of the enabling potentials;

said flyback converter means comprising an inductor (L) and a third switching device (16) connected in series circuit relationship between a low voltage positive polarity battery source of electric potential and the source of negative electric potential, the juncture of the inductor and the third switching device being connected to the anode of a diode rectifier (18) whose cathode is connected to a common positive polarity potential terminal conductor buss (19) that is connected in common to the positive terminal electrodes of the first and second gate triggered conducting devices;

a source of high frequency switching signals (20) having a frequency of alternation that is much higher than the out-of-phase alternating potentials coupled to and controlling operation of said third switching devices,

said first, second, and third switching devices comprising of switching transistors; and

wherein said gate-triggered conducting devices, said first, second and third switching devices, and said rectifying diodes are manufactured as a monolithic integrated circuit.

7. An improved power supply circuit according to claim 6 wherein an electroluminescent lamp suitable for use in illuminating the dial of a wristwatch is connected between the corresponding negative terminal electrodes of the first and second gate triggered conducting devices as a capacitive load.

8. An improved power supply circuit according to claim 6 further including a small trigger gate bias capacitor (26) interconnected between the positive terminal electrode and the control gate of the respective gate triggered conducting devices.

9. An improved power supply circuit according to claim 6 further including a diode (27) connected between each end of the capacitive load and the juncture of the respective trigger gates of the gate triggered conducting devices with the respective first and second switching devices.

10. An improved power supply circuit according to claim 7 further including a small trigger gate bias capacitor (26) interconnected between the positive terminal electrode and the control gate of the respective gate triggered conducting devices.

11. An improved power supply circuit according to claim 10 further including a diode (27) connected between each end of the capacitive load and the juncture of the respective trigger gates of the gate controlled triggered devices with respective first and second switching devices.

Fig.1

Fig.2

SCR EQUIVALENT

Fig.3A

Fig.3B

Fig.3C

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | US-A-4 527 096 (KINDLMANN) <br> * Column 2, lines 48-55; column 4, line 43 - column 5, line 4; column 8, lines 42-61; figures 1-3 * <br> ----- | 1 | H 05 B 33/08 <br> G 04 G 1/00 |

TECHNICAL FIELDS
SEARCHED (Int. Cl.5)

H 05 B
G 04 G

The present search report has been drawn up for all claims

| Place of search | Date of completion of the search | Examiner |
|---|---|---|
| THE HAGUE | 13-03-1990 | SPEISER P. |

EPO FORM 1503 03.82 (P0401)